# EUROPEAN PATENT SPECIFICATION

(11) **EP 3 460 347 B1**
(45) Date of publication and mention of the grant of the patent: **10.04.2024**
(21) Application number: 16902392.6
(22) Date of filing: 18.05.2016
(51) Int. Cl.: G05B 19/042, F24F 11/49, F24F 11/36, F24F 11/52, F24F 11/56, F24F 11/89, G05B 23/02

(54) **AIR CONDITIONER**
KLIMAANLAGE
CLIMATISEUR

(43) Date of publication of application: 27.03.2019
(73) Proprietor: Mitsubishi Electric Corporation, Chiyoda-ku Tokyo 100-8310 (JP)
(72) Inventor: MURAMATSU, Hidetoshi, Tokyo 102-0073 (JP); INO, Hiroyuki, Tokyo 102-0073 (JP)
(74) Representative: Pfenning, Meinig & Partner mbB
(86) International application number: PCT/JP2016/064749
(87) International publication number: WO 2017/199373

(56) References cited:
- WO-A1-2013/038704
- JP-A- S6 380 151
- JP-A- S6 380 151
- JP-A- H10 111 061
- JP-A- 2000 346 433
- JP-A- 2002 277 015
- JP-A- 2005 055 009
- JP-A- 2005 055 009
- JP-A- 2011 117 655
- JP-A- 2011 185 547
- JP-A- 2011 185 547
- JP-A- 2014 224 612

## Description

### Field

The present invention relates to an air conditioner that performs air conditioning using a refrigerant.

### Background

As a technology for coping with an abnormality of an air conditioner, Patent Literature 1 discloses an air conditioner in which, when an abnormality occurs, details of the abnormality and data concerning a method of coping with the occurrence of the abnormality are transmitted from an indoor unit to a remote controller. In the following description, in some cases, a term "Remote" is used as an abbreviation for "remote controller".

As one of abnormalities of the air conditioner, there is a leak of a refrigerant. When the leak of the refrigerant occurs, deterioration in operation efficiency in the air conditioner occurs. Finally, the air conditioner falls into an inoperable state. As measures against the leak of the refrigerant, the leak of the refrigerant is sometimes detected using a refrigerant-leak detection sensor.
JP 2011 117655 A discloses an air conditioner comprising an outdoor unit and an indoor unit having an detection means for detecting deterioration or the end of the life time of either the unit or components thereof. When a length of the operating time of the air conditioner exceeds the life time, the subsequent normal operation of the air conditioner is forcibly stopped.

WO 2013 038704 A1 discloses an air conditioner comprising an indoor unit having a control device and a leak detection unit consisting of two leak detection sensors. Once one of the two leak detection sensors operates over a predetermined time or fails, the control device is configured to perform control of switching the operation of the one sensor to the operation of the rest one of the two sensors.

### Citation List

### Patent Literature

Patent Literature 1: Japanese Patent Application Laid-Open No. 2010-236758

JP 2002-277015 A discloses a photocatalyst device capable of sterilizing a fluid effectively by contacting the fluid uniformly and sufficiently with the photocatalyst, wherein the device comprises a fluorescent time whose energization time is used for determining a need for replacement.

### Summary

### Technical Problem

However, among sensors that detect the leak of the refrigerant, there is a sensor in which deterioration in detection performance for the leak of the refrigerant occurs because of the end of a service life of the sensor. When the deterioration in the detection performance for the leak of the refrigerant occurs, the leak of the refrigerant sometimes cannot be accurately detected. Reliability of detection of a refrigerant leak of the air conditioner is deteriorated.

The present invention has been devised in view of the above, and an object of the present invention is to obtain an air conditioner that can maintain detection performance for a refrigerant leak in a refrigerant-leak detection sensor in a normal state and has high reliability of detection of the refrigerant leak.

### Solution to Problem

The invention is defined in the independent claim. To solve the problem and achieve the object, an air conditioner according to the present invention includes, amongst others: an indoor unit disposed indoors; an outdoor unit disposed outdoors, a refrigerant being circulated between the outdoor unit and the indoor unit; a remote controller communicably connected to the indoor unit; and a refrigerant-leak detection sensor to detect a leak of the refrigerant. The indoor unit includes an indoor-unit control unit to control operation of the indoor unit. The remote controller includes: a remote-controller control unit to control operation of the remote controller; and a display unit to display various kinds of information in the remote controller. When determining that necessity of replacement of the refrigerant-leak detection sensor is detected, the indoor-unit control unit performs control for transmitting replacement period notification information for instructing notification of the necessity of the replacement of the refrigerant-leak detection sensor to the remote controller. The remote-controller control unit performs control for displaying, based on the replacement period notification information, on the display unit, a message for notifying the necessity of the replacement of the refrigerant-leak detection sensor.

### Advantageous Effects of Invention

The air conditioner according to the present invention has an effect that it is possible to obtain an air conditioner that can maintain detection performance for a refrigerant leak in a refrigerant-leak detection sensor in a normal state and has high reliability of detection of the refrigerant leak.

### Brief Description of Drawings

FIG. 1 is a schematic diagram illustrating the configuration of an air conditioner in a first embodiment not part of the present invention.
FIG. 2 is a main part functional block diagram of the air conditioner in the first embodiment not part of the present invention.
FIG. 3 is a diagram illustrating an example of a hardware configuration of a processing circuit in the first embodiment not part of the present invention.
FIG. 4 is a flowchart for explaining a notification operation for a replacement period of a refrigerant-leak detection sensor of the air conditioner in the first embodiment not part of the present invention.
FIG. 5 is a diagram illustrating an example of an exterior configuration of a remote of the air conditioner in the first embodiment part of the present invention.
FIG. 6 is a diagram illustrating an example of a message for notifying necessity of replacement of the refrigerant-leak detection sensor, the message being displayed on a display unit of the remote of the air conditioner in the first embodiment not part of the present invention.
FIG. 7 is a flowchart for explaining a notification operation for a replacement period of a refrigerant-leak detection sensor of an air conditioner in a third embodiment not part of the present invention.
FIG. 8 is a diagram illustrating an example of a message for notifying necessity of replacement of a refrigerant-leak detection sensor 32, the message being displayed on a display unit of a remote of an air conditioner in a fourth embodiment of the present invention.

### Description of Embodiments

Air conditioners in embodiments of the present invention are explained in detail below with reference to the drawings. Note that the present invention is not limited by the embodiments and is defined in the claims. The second and fourth embodiment are according to the invention, while the other embodiments do not include all features of the invention, but are useful for understanding it.

### First Embodiment not part of the present invention.

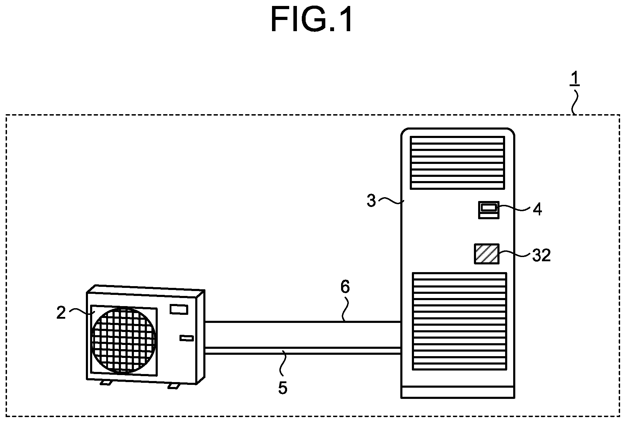

FIG. 1 is a schematic diagram illustrating the configuration of an air conditioner 1 in a first embodiment not part of the present invention.

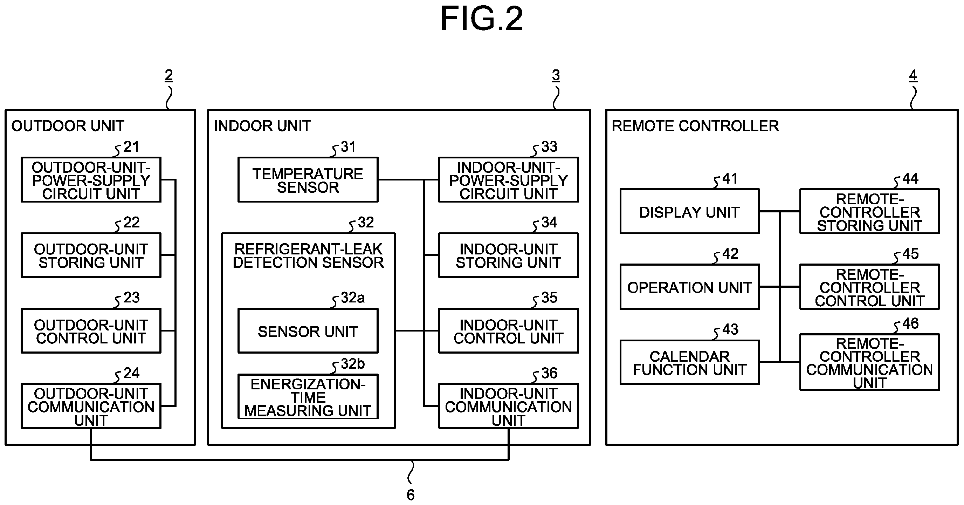

FIG. 2 is a main part functional block diagram of the air conditioner 1 in the first embodiment not part of the present invention.

The air conditioner 1 in the first embodiment includes an outdoor unit 2 disposed outdoors, an indoor unit 3 disposed indoors, and a remote controller 4 that remotely controls the operation of the air conditioner 1.

The outdoor unit 2 and the indoor unit 3 are connected by a refrigerant pipe 5 and an internal/external communication line 6. A refrigerant for performing heat exchange flows in the refrigerant pipe 5. In the air conditioner 1, one completed refrigeration cycle is formed by the outdoor unit 2 and the indoor unit 3. The air conditioner 1 performs heat transfer between the air inside a room, which is an air conditioning target space, and the air outside the room using the refrigerant circulating between the outdoor unit 2 and the indoor unit 3 through the refrigerant pipe 5 and implements air conditioning in the room. In FIG. 1 and FIG. 2, only the configuration of a main part of the air conditioner 1 is illustrated. Illustration of various constituent units such as a refrigeration cycle mechanism including a blower fan and a compressor is omitted.

The outdoor unit 2 includes, as main components, an outdoor-unit power-supply circuit unit 21 that generates control power for operating components in the outdoor unit 2, an outdoor-unit storing unit 22 that stores various kinds of information necessary when performing air conditioning with the air conditioner 1, an outdoor-unit control unit 23 that controls the components in the outdoor unit 2 to perform the air conditioning with the air conditioner 1 and controls the operation of the outdoor unit 2, and an outdoor-unit communication unit 24 that performs communication of information between the outdoor-unit communication unit 24 and an indoor-unit communication unit 36 of the indoor unit 3. The components of the outdoor unit 2 are capable of exchanging information with one another.

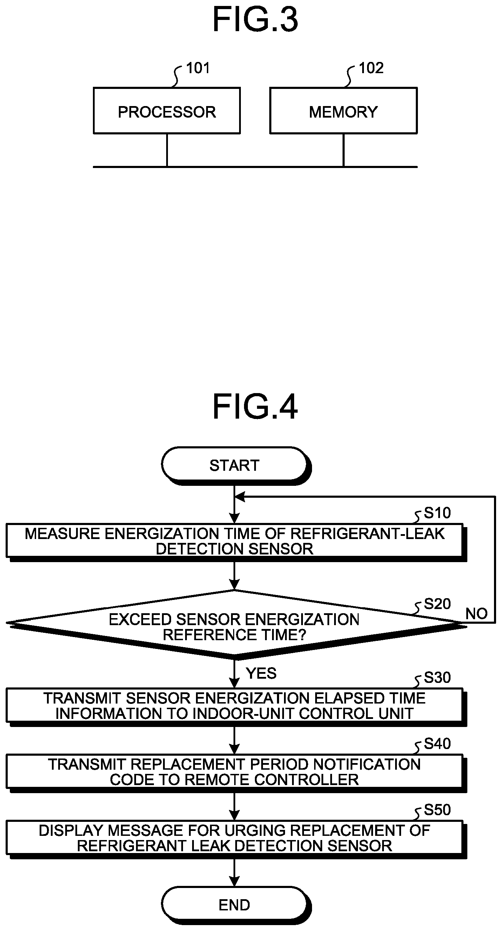

The outdoor-unit control unit 23 is implemented as, for example, a processing circuit having a hardware configuration illustrated in FIG. 3. FIG. 3 is a diagram illustrating an example of a hardware configuration of a processing circuit in the first embodiment not part of the present invention.

When components configuring the outdoor-unit control unit 23 are implemented by the processing circuit illustrated in FIG. 3, the components configuring the outdoor-unit control unit 23 are implemented by a processor 101 executing a program stored in a memory 102. A plurality of processors and a plurality of memories can implement the functions in cooperation with each other. A part of the functions of the outdoor-unit control unit 23 can be implemented as an electronic circuit. The other part of the functions of the outdoor-unit control unit 23 can be implemented using the processor 101 and the memory 102. Similarly, the outdoor-unit communication unit 24 can be configured to be implemented by the processor 101 executing a program stored in the memory 102. A processor and a memory for implementing the outdoor-unit communication unit 24 can be the same as the processor and the memory for implementing the outdoor-unit control unit 23 or can be a processor and a memory different from the processor and the memory for implementing the outdoor-unit control unit 23.

The indoor unit 3 includes, as main components, a temperature sensor 31, which is an indoor-temperature detecting unit that detects various temperatures necessary for air conditioning processing in the air conditioner 1 such as the temperature inside a room in which the indoor unit 3 is disposed and the temperature of a pipe, a refrigerant-leak detection sensor 32 that detect a leak of a refrigerant, an indoor-unit power-supply circuit unit 33 that generates control power for operating the components in the indoor unit 3, an indoor-unit storing unit 34 that stores various kinds of information necessary for the air conditioning processing in the air conditioner 1, an indoor-unit control unit 35 that controls the components in the indoor unit 3 and controls the operation of the indoor unit 3 to perform air conditioning with the air conditioner 1, and an indoor-unit communication unit 36 that performs communication of information between the indoor-unit communication unit 36 and the remote 4.

The refrigerant-leak detection sensor 32 includes a sensor unit 32a that detects a leak of the refrigerant and an energization-time measuring unit 32b that measures a time in which the refrigerant-leak detection sensor 32 is energized from the indoor-unit power-supply circuit unit 33 of the indoor unit 3.

As the refrigerant-leak detection sensor 32, a semiconductor gas sensor is used. Note that the refrigerant-leak detection sensor 32 is not limited to the semiconductor gas sensor and can be a gas sensor of another detection type such as an infrared gas sensor.

In the refrigerant-leak detection sensor 32, deterioration in detection performance in detection of a refrigerant leak occurs according to the energization time. Therefore, the energization-time measuring unit 32b measures the energization time of the refrigerant-leak detection sensor 32 to inform a user of replacement period before deterioration in detection accuracy in detection of a refrigerant leak occurs. When the energization time exceeds a certain fixed energization time, the energization-time measuring unit 32b notifies the indoor-unit control unit 35 to that effect to inform the replacement period. Note that replacement includes a meaning of repair.

The indoor-unit power-supply circuit unit 33 is connected to a commercial AC power supply, which is a not-illustrated external power supply, by a power supply line. The indoor-unit power-supply circuit unit 33 generates control power for operating the units in the indoor unit 3 from AC power supplied from the commercial AC power supply. The indoor-unit power-supply circuit unit 33 is connected to the temperature sensor 31, the refrigerant-leak detection sensor 32, the indoor-unit storing unit 34, the indoor-unit control unit 35, and the indoor-unit communication unit 36 to be capable of supplying the generated power thereto.

The indoor-unit storing unit 34 stores various kinds of information necessary when performing air conditioning with the air conditioner 1.

The indoor-unit control unit 35 controls the components in the indoor unit 3 to perform air conditioning with the air conditioner 1. The indoor-unit control unit 35 controls a notification operation for a replacement period by the refrigerant-leak detection sensor 32 in the air conditioner 1.

The indoor-unit communication unit 36 is capable of performing bidirectional communication of information between the indoor-unit communication unit 36 and the outdoor-unit communication unit 24 of the outdoor unit 2 via the internal/external communication line 6.

The indoor-unit control unit 35 is implemented as, for example, a processing circuit having the hardware configuration illustrated in FIG. 3. When components configuring the indoor-unit control unit 35 are implemented by the processing circuit illustrated in FIG. 3, the components configuring the indoor-unit control unit 35 are implemented by the processor 101 executing a program stored in the memory 102. A plurality of processors and a plurality of memories can implement the functions in cooperation with each other. A part of the functions of the indoor-unit control unit 35 can be implemented as an electronic circuit. The other part can be implemented using the processor 101 and the memory 102. Similarly, the indoor-unit communication unit 36 can be configured to be implemented by the processor 101 executing a program stored in the memory 102. A processor and a memory for implementing the indoor-unit communication unit 36 can be the same as the processor and the memory for implementing the indoor-unit control unit 35 or can be a processor or a memory different from the processor and the memory for implementing the indoor-unit control unit 35.

The remote 4 is an operation device for setting information necessary in air conditioning by the air conditioner 1 such as a clock function for setting the present time and a set temperature serving as a target of an indoor temperature in the air conditioning by the air conditioner 1. The remote 4 includes, as main components, a display unit 41 that displays various kinds of information, an operation unit 42 that receives setting operation, a calendar function unit 43 having a clock function concerning date and time, a remote-controller storing unit 44 that stores various kinds of information necessary for air conditioning processing in the air conditioner 1, a remote-controller control unit 45 that controls the operation of the remote 4 and a notification operation for a replacement period of the refrigerant-leak detection sensor 32, and a remote-controller communication unit 46 that performs communication of information between the remote-controller communication unit 46 and the indoor-unit communication unit 36 of the indoor unit 3. The remote-controller communication unit 46 is capable of performing bidirectional communication of information by wire or radio between the remote communication unit 46 and the indoor-unit communication unit 36 of the indoor unit 3.

The remote control unit 45 is implemented as, for example, a processing circuit having the hardware configuration illustrated in FIG. 3. When components configuring the remote control unit 45 are implemented by the processing circuit illustrated in FIG. 3, the components configuring the remote control unit 45 are implemented by the processor 101 executing a program stored in the memory 102. A plurality of processors and a plurality of memories can implement the functions in cooperation with each other. A part of the functions of the remote control unit 45 can be implemented as an electronic circuit and the other part can be implemented using the processor 101 and the memory 102. Similarly, the remote communication unit 46 can be configured to be implemented by the processor 101 executing a program stored in the memory 102. A processor and a memory for implementing the remote communication unit 46 can be the same as the processor and the memory for implementing the remote control unit 45 or can be different from the processor and the memory for implementing the remote control unit 45.

The operation of the air conditioner 1 in the first embodiment is explained. FIG. 4 is a flowchart for explaining a notification operation for the replacement period of the refrigerant-leak detection sensor 32 of the air conditioner 1 in the first embodiment not part of the present invention. Processing illustrated in FIG. 4 is performed not only during an air conditioning operation of the air conditioner 1 but also in a state in which the air conditioner 1 is energized.

First, at step S10, the energization-time measuring unit 32b of the refrigerant-leak detection sensor 32 measures a sensor energization time, which is a time in which the refrigerant-leak detection sensor 32 is energized by the indoor-unit power-supply circuit unit 33 of the indoor unit 3 from an initial startup time. The sensor energization time can be measured by connecting a voltmeter to a power supply line that energizes the refrigerant-leak detection sensor 32 from the indoor-unit power-supply circuit unit 33 and measuring a time in which a predetermined supply voltage to the refrigerant-leak detection sensor 32 is detected.

Subsequently, at step S20, the energization-time measuring unit 32b determines whether the measured sensor energization time exceeds a predetermined sensor reference energization time. The sensor reference energization time is a sensor energization time serving as a reference for determining necessity of replacement of the refrigerant-leak detection sensor 32 due to aged deterioration. When the measured sensor energization time exceeds the predetermined sensor reference energization time, the energization-time measuring unit 32b determines that there is the necessity of the replacement of the refrigerant-leak detection sensor 32. The sensor reference energization time is stored in the energization-time measuring unit 32b in advance.

As the sensor-reference energization time, an energization time shorter than an energization time of the refrigerant-leak detection sensor 32 in which occurrence of deterioration in detection performance of the refrigerant-leak detection sensor 32 is estimated is set to notify the necessity of the replacement of the refrigerant-leak detection sensor 32 to the user before deterioration in the detection performance of the refrigerant-leak detection sensor 32 due to the energization time of the refrigerant-leak detection sensor 32 occurs. That is, in the sensor reference energization time, a time difference from the energization time of the refrigerant-leak detection sensor 32 in which occurrence of deterioration in the detection performance of the refrigerant-leak detection sensor 32 is estimated is provided. The time difference is set considering a time in which the user is considered to be capable of coping with the replacement of the refrigerant-leak detection sensor 32 after the necessity of the replacement of the refrigerant-leak detection sensor 32 is notified to the user.

When it is determined that the sensor energization time does not exceed the predetermined sensor reference energization time, that is, when it is determined No at step S20, the processing returns to step S10.

When it is determined that the sensor energization time exceeds the predetermined sensor reference energization time, that is, when it is determined Yes at step S20, at step S30, the energization-time measuring unit 32b transmits, to the indoor-unit control unit 35 of the indoor unit 3, sensor energization elapsed time information indicating that the sensor energization time exceeds the predetermined sensor reference energization time.

When receiving the sensor energization elapsed time information, the indoor-unit control unit 35 determines that the necessity of the replacement of the refrigerant-leak detection sensor 32 is detected. That is, when the energization-time measuring unit 32b detects that the sensor energization time exceeds the predetermined sensor reference energization time, the indoor-unit control unit 35 determines that the necessity of the replacement of the refrigerant-leak detection sensor 32 is detected. When determining that the necessity of the replacement of the refrigerant-leak detection sensor 32 is detected, at step S40, the indoor-unit control unit 35 transmits a replacement period notification code corresponding to a message to the remote control unit 45 of the remote 4 as replacement period notification information for instructing notification of the necessity of the replacement of the refrigerant-leak detection sensor 32.

When receiving the replacement period notification code, referring to information for discriminating content of the code stored in the remote storing unit 44 in advance, the remote control unit 45 determines that the replacement period notification code is an instruction for causing the display unit 41 to display a message for urging the replacement of the refrigerant-leak detection sensor 32, that is, a message for notifying the necessity of the replacement of the refrigerant-leak detection sensor 32. At step S50, the remote control unit 45 causes the display unit 41 to display a message including a message character string corresponding to the replacement period notification code and for notifying the necessity of the replacement of the refrigerant-leak detection sensor 32. That is, the remote control unit 45 performs control for displaying, on the display unit 41, maintenance information, that is, a message for notifying the necessity of the replacement of the refrigerant-leak detection sensor 32 based on the replacement period notification code.

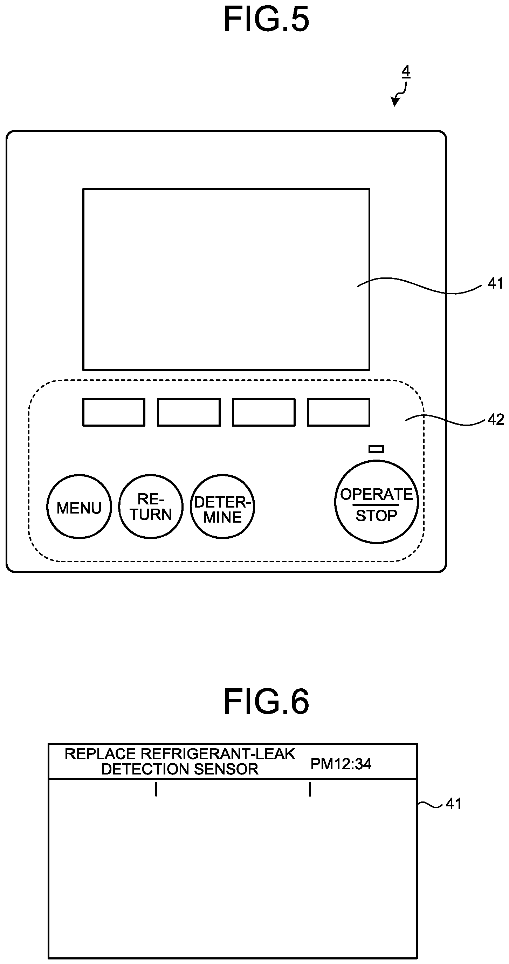

FIG. 5 is a diagram illustrating an example of an exterior configuration of the remote 4 of the air conditioner in the first embodiment not part of the present invention. FIG. 6 is a diagram illustrating an example of a message for notifying the necessity of the replacement of the refrigerant-leak detection sensor 32, the message being displayed on the display unit 41 of the remote 4 of the air conditioner in the first embodiment not part of the present invention. In FIG. 6, a state is illustrated in which a message "refrigerant-leak detection sensor replacement" is displayed on the display unit 41 of the remote 4 as the message for notifying the necessity of the replacement of the refrigerant-leak detection sensor 32.

The message for notifying the necessity of the replacement of the refrigerant-leak detection sensor 32 is displayed as a message sentence on the display unit 41 of the remote 4, which is an operation device of the user, as illustrated in FIG. 6, whereby the user can quickly grasp the necessity of the replacement of the refrigerant-leak detection sensor 32. Consequently, the user can perform the replacement of the refrigerant-leak detection sensor 32 before deterioration in the detection performance of the refrigerant-leak detection sensor 32 due to the energization time of the refrigerant-leak detection sensor 32 occurs.

Consequently, before deterioration in the detection performance of the refrigerant-leak detection sensor 32 due to the energization time of the refrigerant-leak detection sensor 32 occurs, it is possible to notify the necessity of the replacement of the refrigerant-leak detection sensor 32 to the user, that is, notify the user that a replacement period of the refrigerant-leak detection sensor 32 has come.

The message for notifying the necessity of the replacement of the refrigerant-leak detection sensor 32 is a message for urging the user to replace the refrigerant-leak detection sensor 32 and is unrelated to the operation of the air conditioner 1. That is, even when the message for notifying the necessity of the replacement of the refrigerant-leak detection sensor 32 is displayed on the display unit 41 of the remote 4, the outdoor-unit control unit 23 and the indoor-unit control unit 35 do not perform control for stopping the operation of the air conditioner. Therefore, even when the message for notifying the necessity of the replacement of the refrigerant-leak detection sensor 32 is displayed on the display unit 41 of the remote 4 during the operation of the air conditioner 1, the outdoor-unit control unit 23 and the indoor-unit control unit 35 can maintain the operation of the air conditioner 1.

Note that, in the above explanation, the refrigerant-leak detection sensor 32 is provided in the indoor unit 3. However, the disposition of the refrigerant-leak detection sensor 32 is not limited to this. The refrigerant-leak detection sensor 32 can be provided in the outdoor unit 2. The refrigerant-leak detection sensor 32 only has to be provided in a position separated from the outdoor unit 2 or a position separated from the indoor unit 3 where a leak of the refrigerant in the air conditioner 1 can be detected. A plurality of refrigerant-leak detection sensors 32 can be provided.

When the refrigerant-leak detection sensor 32 is provided away from the outdoor unit 2 or the indoor unit 3, an indoor-unit communication unit capable of communicating information by wire or radio between the indoor-unit communication unit and the outdoor-unit communication unit 24 of the outdoor unit 2 or between the indoor-unit communication unit and the indoor-unit communication unit 36 of the indoor unit 3 only has to be provided in the refrigerant-leak detection sensor 32.

As explained above, when detecting that the sensor energization time exceeds the predetermined sensor reference energization time, the air conditioner 1 in the first embodiment performs the control for displaying, on the display unit 41 of the remote 4, the message for notifying the necessity of the replacement of the refrigerant-leak detection sensor 32. Consequently, before deterioration in the detection performance of the refrigerant-leak detection sensor 32 due to aged deterioration of the refrigerant-leak detection sensor 32 occurs, the air conditioner 1 can notify the necessity of the replacement of the refrigerant-leak detection sensor 32 to the user, that is, notify the user that the replacement period of the refrigerant-leak detection sensor 32 has come.

The user can promptly replace the refrigerant-leak detection sensor 32 before deterioration in the detection performance of the refrigerant-leak detection sensor 32 occurs. Consequently, the detection performance of the refrigerant-leak detection sensor 32 can be always maintained in a normal state. The detection performance for a refrigerant leak in the refrigerant-leak detection sensor 32 can be maintained in a normal state. The reliability of detection of a refrigerant leak in the air conditioner 1 is improved.

### Second Embodiment of the invention.

In the first embodiment explained above, the energization-time measuring unit 32b of the refrigerant-leak detection sensor 32 measures the sensor energization time and determines that there is the necessity of the replacement of the refrigerant-leak detection sensor 32. When the refrigerant-leak detection sensor 32 determines that the necessity of the replacement of the refrigerant-leak detection sensor 32 is detected and notifies the indoor-unit control unit 35 to that effect, the indoor-unit control unit 35 does not grasp the energization time of the refrigerant-leak detection sensor 32.

Therefore, in the second embodiment which illustrates the invention, the indoor-unit control unit 35 stores a life time of the refrigerant-leak detection sensor 32 in advance. The indoor-unit control unit 35 measures an elapsed time from initial startup of the air conditioner 1, that is, an indoor unit energization time, which is an energization time of the indoor unit 3. When the air conditioner 1 is started and both of the indoor unit 3 and the refrigerant-leak detection sensor 32 are energized, the indoor unit energization time is the same time as the sensor energization time.

The indoor-unit control unit 35 calculates a margin time, which is a difference time between the sensor energization time and the life time of the refrigerant-leak detection sensor 32. The life time is a time in which deterioration in the detection performance of the refrigerant-leak detection sensor 32 due to the energization time of the refrigerant-leak detection sensor 32, that is, deterioration in the detection performance of the refrigerant-leak detection sensor 32 due to aged deterioration occurs. The margin time is a remaining time from a time when it is determined that the sensor energization time exceeds the predetermined sensor reference energization time until a time when it is estimated that deterioration in the detection performance of the refrigerant-leak detection sensor 32 occurs.

In this case, at step S40 explained in the first embodiment, the indoor-unit control unit 35 transmits the calculated margin time to the remote control unit 45 of the remote 4 together with a replacement period notification code. The remote control unit 45 causes the display unit 41 to display a time of the margin time together with a message for notifying the necessity of the replacement of the refrigerant-leak detection sensor 32. Consequently, the user can grasp the margin time. Therefore, the user can systematically proceed with arrangement of the replacement of the refrigerant-leak detection sensor 32 referring to the margin time.

Note that, when the refrigerant-leak detection sensor 32 is replaced, measurement of an indoor unit energization time in the indoor-unit control unit 35 also needs to be started anew. In this case, by performing, from the remote 4, reset operation for resetting a measurement value of the indoor unit energization time in the indoor-unit control unit 35, the measurement of the indoor unit energization time in the indoor-unit control unit 35 can also be started anew.

As explained above, the air conditioner in the second embodiment can provide the margin time to the user in addition to the effects in the first embodiment. Consequently, the user can systematically proceed with the arrangement of the replacement of the refrigerant-leak detection sensor 32 referring to the margin time.

### Third Embodiment part of the present invention.

In a third embodiment, the indoor-unit control unit 35 of the indoor unit 3 measures an elapsed time from initial startup of the air conditioner 1, that is, an indoor unit energization time, which is an energization time of the indoor unit 3, and determines necessity of replacement of the refrigerant-leak detection sensor 32. The air conditioner in the third embodiment basically includes the same components and the same functions as the components and the functions of the air conditioner 1 in the first embodiment except that the air conditioner measures the indoor-unit energization time, which is the energization time of the indoor unit 3, and determines the necessity of the replacement of the refrigerant-leak detection sensor 32.

In the third embodiment, items not particularly described are the same as the items in the first embodiment. The same functions and the same components are explained using the same reference numeral and signs. Explanation concerning the functions and the components of the air conditioner in the third embodiment same as the functions and the components of the air conditioner 1 in the first embodiment is omitted.

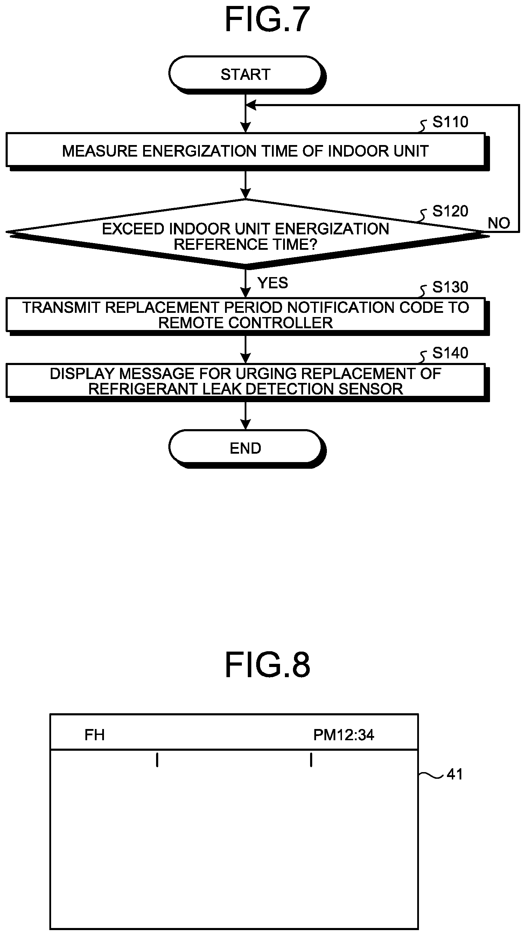

The operation of the air conditioner in the third embodiment is explained. FIG. 7 is a flowchart for explaining a notification operation for a replacement period of the refrigerant-leak detection sensor 32 of the air conditioner in the third embodiment not part of the present invention. Processing illustrated in FIG. 7 is performed during energization of the air conditioner.

First, at step S110, the indoor-unit control unit 35 of the indoor unit 3 measures an elapsed time from initial startup of the air conditioner 1, that is, an indoor unit energization time, which is an energization time of the indoor unit 3 from the initial startup of the air conditioner 1.

Subsequently, at step S120, the indoor-unit control unit 35 determines whether the measured indoor unit energization time exceeds a predetermined indoor unit reference energization time. The predetermined indoor unit reference energization time is an energization time of the indoor unit 3 serving as a reference for determining the necessity of the replacement of the refrigerant-leak detection sensor 32 due to aged deterioration. When the measured indoor unit energization time exceeds the predetermined indoor unit reference energization time, the indoor-unit control unit 35 determines that there is the necessity of the replacement of the refrigerant-leak detection sensor 32. The indoor unit reference energization time is stored in the indoor-unit control unit 35 in advance.

As the indoor unit reference energization time, an energization time shorter than an energization time of the refrigerant-leak detection sensor 32 in which occurrence of deterioration in detection performance of the refrigerant-leak detection sensor 32 is estimated is set to notify the necessity of the replacement of the refrigerant-leak detection sensor 32 to the user before deterioration in the detection performance of the refrigerant-leak detection sensor 32 due to aged deterioration occurs. That is, in the indoor unit reference energization time, a time difference from the indoor unit energization time in which occurrence of deterioration in the detection performance of the refrigerant-leak detection sensor 32 is estimated is provided. The time difference is set considering a time in which the user is considered to be capable of coping with the replacement of the refrigerant-leak detection sensor 32 after the necessity of the replacement of the refrigerant-leak detection sensor 32 is notified to the user.

When it is determined that the indoor unit energization time does not exceed the predetermined indoor unit reference energization time, that is, when it is determined No at step S120, the processing returns to step S110.

When it is determined that the indoor unit energization time exceeds the predetermined indoor unit reference energization time, that is, when it is determined Yes at step S120, the indoor-unit control unit 35 determines that the necessity of the replacement of the refrigerant-leak detection sensor 32 is detected. When determining that the necessity of the replacement of the refrigerant-leak detection sensor 32 is detected, at step S130, the indoor-unit control unit 35 transmits a replacement period notification code to the remote control unit 45 of the remote 4.

When receiving the replacement period notification code, referring to information for discriminating content of the code stored in the remote storing unit 44 in advance, the remote control unit 45 determines that the replacement period notification code is an instruction for causing the display unit 41 to display a message for notifying the necessity of the replacement of the refrigerant-leak detection sensor 32. At step S140, the remote control unit 45 causes the display unit 41 to display a message including a message character string corresponding to the replacement period notification code and for notifying the necessity of the replacement of the refrigerant-leak detection sensor 32. That is, the remote control unit 45 performs control for displaying, on the display unit 41, a message for notifying the necessity of the replacement of the refrigerant-leak detection sensor 32 based on the replacement period notification code.

As explained above, the indoor-unit control unit 35 of the indoor unit 3 measures the indoor unit energization time, which is the energization time of the indoor unit 3, and determines the necessity of the replacement of the refrigerant-leak detection sensor 32. This also makes it possible to, before deterioration in the detection performance of the refrigerant-leak detection sensor 32 due to aged deterioration of the refrigerant-leak detection sensor 32 occurs, notify the necessity of the replacement of the refrigerant-leak detection sensor 32 to the user, that is, notify the user that the replacement period of the refrigerant-leak detection sensor 32 has come. It is desirable to use both of the determination of the necessity of the replacement of the refrigerant-leak detection sensor 32 by the energization-time measuring unit 32b of the refrigerant-leak detection sensor 32 and the determination of the necessity of the replacement of the refrigerant-leak detection sensor 32 by the indoor-unit control unit 35 of the indoor unit 3. By using both of the two kinds of determination processing, even when the determination of the necessity of the replacement of the refrigerant-leak detection sensor 32 is not appropriately performed because of a failure of the refrigerant-leak detection sensor 32, the determination of the necessity of the replacement of the refrigerant-leak detection sensor 32 by the indoor-unit control unit 35 of the indoor unit 3 is performed. Consequently, before deterioration of the detection performance of the refrigerant-leak detection sensor 32 due to aged deterioration of the refrigerant-leak detection sensor 32 occurs, it is possible to notify the user that the replacement period of the refrigerant-leak detection sensor 32 has come. That is, by using both of the two kinds of determination processing, it is possible to prevent a situation in which, because of a failure of the refrigerant-leak detection sensor 32, the user is not notified that the replacement period of the refrigerant-leak detection sensor 32 has come and the life time of the refrigerant-leak detection sensor 32 is exceeded. The reliability of the detection of a refrigerant leak in the air conditioner 1 is further improved.

To improve measurement accuracy of the indoor unit energization time, a transmitter having high accuracy or a dedicated integrated circuit (IC) can be mounted on a circuit configuring the indoor-unit control unit 35. Further, the indoor-unit control unit 35 can periodically receive time data from the remote 4 and correct a measurement value of the indoor unit energization time in the indoor-unit control unit 35.

Instead of the energization time of the indoor-unit control unit 35, an operation time of the indoor unit 3 or a time in which a compressor included in the outdoor unit 2 operates can be measured and used. By determining that there is the necessity of the replacement of the refrigerant-leak detection sensor 32 using the indoor-unit energization time, the operation time of the indoor unit 3, and the time in which the compressor included in the outdoor unit 2 operates, before deterioration in the detection performance of the refrigerant-leak detection sensor 32 due to aged deterioration of the refrigerant-leak detection sensor 32 occurs, it is also possible to notify the user that the replacement period of the refrigerant-leak detection sensor 32 has come. For the determination of the necessity of the replacement of the refrigerant-leak detection sensor 32, a state value measured in the indoor unit 3 or the outdoor unit 2 is used instead of the energization time of the refrigerant-leak detection sensor 32. Consequently, the energization-time measuring unit 32b in the refrigerant-leak detection sensor 32 becomes unnecessary. It is possible to simplify the configuration of the refrigerant-leak detection sensor 32.

The indoor-unit control unit 35 of the indoor unit 3 is likely to be replaced depending on a situation. Therefore, by transmitting the measurement value of the indoor unit energization time to the outdoor unit 2 and causing the indoor unit 3 and the outdoor unit 2 to share information concerning the measurement value of the indoor unit energization time, it is possible to cope with backup at the time when the indoor unit 3 or the outdoor unit 2 is replaced.

As explained above, in the air conditioner in the third embodiment, the indoor-unit control unit 35 carries out the determination of the necessity of the replacement of the refrigerant-leak detection sensor 32. Consequently, before deterioration in the detection performance of the refrigerant-leak detection sensor 32 due to aged deterioration of the refrigerant-leak detection sensor 32 occurs, it is possible to notify the user that the replacement period of the refrigerant-leak detection sensor 32 has come. It is possible to provide the air conditioner having high reliability of detection of a refrigerant leak.

### Fourth Embodiment which is part of the present invention.

In the embodiments explained above, the remote control unit 45 causes the display unit 41 to display the message including the message character string corresponding to the replacement period notification code and for notifying the necessity of the replacement of the refrigerant-leak detection sensor 32. The remote control unit 45 can cause the display unit 41 to display a message code corresponding to the replacement period notification code instead of the message character string.

FIG. 8 is a diagram illustrating an example of a message for notifying the necessity of the replacement of the refrigerant-leak detection sensor 32, the message being displayed on the display unit 41 of the remote 4 of an air conditioner in a fourth embodiment of the present invention. In FIG. 8, a state is illustrated in which, as a message for notifying the necessity of the replacement of the refrigerant-leak detection sensor 32, a message code "FH" is displayed on the display unit 41 of the remote 4.

The message for notifying the necessity of the replacement of the refrigerant-leak detection sensor 32 is displayed as the message code on the display unit 41 of the remote 4, which is an operation device of a user, as illustrated in FIG. 8, whereby the user can also quickly grasp the necessity of the replacement of the refrigerant-leak detection sensor 32. Consequently, the user can promptly cope with the replacement of the refrigerant-leak detection sensor 32.

The message character string illustrated in FIG. 6 and the message code illustrated in FIG. 8 can be alternately displayed on the display unit 41 of the remote 4 at predetermined intervals. In this case as well, the margin time explained above can be displayed together with the message character string and the message code.

As explained above, by displaying the message code corresponding to the replacement period notification code on the display unit 41 of the remote 4, before deterioration in the detection performance of the refrigerant-leak detection sensor 32 occurs, the air conditioner can also notify the necessity of the replacement of the refrigerant-leak detection sensor 32 to the user, that is, notify the user that the replacement period of the refrigerant-leak detection sensor 32 has come.

The configurations explained above in the second and fourth embodiments indicate examples of the content of the present invention. The configurations can be combined with other publicly-known technologies. A part of the configurations can be omitted or changed as long as staying within the scope of the claims

### Reference Signs List

1 air conditioner; 2 outdoor unit; 3 indoor unit; 4 remote controller; 5 refrigerant pipe; 6 internal/external communication line; 21 outdoor-unit power-supply circuit unit; 22 outdoor-unit storing unit; 23 outdoor-unit control unit; 24 outdoor-unit communication unit; 31 temperature sensor; 32 refrigerant-leak detection sensor; 32a sensor unit; 32b energization-time measuring unit; 33 indoor-unit power-supply circuit unit; 34 indoor-unit storing unit; 35 indoor-unit control unit; 36 indoor-unit communication unit; 41 display unit; 42 operation unit; 43 calendar function unit; 44 remote-controller storing unit; 45 remote-controller control unit; 46 remote-controller communication unit; 101 processor; 102 memory.

## Claims

1. An air conditioner (1) comprising:
an indoor unit (3) for being disposed indoors;
an outdoor unit (2) for being disposed outdoors, a refrigerant for being circulated between the outdoor unit (2) and the indoor unit (3);
a remote controller (4) communicably connected to the indoor unit (3); and
a refrigerant-leak detection sensor (32) to detect a leak of the refrigerant, wherein
the indoor unit (3) includes an indoor-unit control unit (35) to control operation of the indoor unit (3),
the remote controller (4) includes:
a remote controller control unit (45) to control operation of the remote controller (4); and
a display unit (41) to display various kinds of information in the remote controller (4),
wherein the refrigerant-leak detection sensor (32) includes an energization-time measuring unit (32b) that is configured to measure an energization time in which the refrigerant-leak detection sensor (32) is energized, and
the energization-time measuring unit (32b)is configured to transmit, when the energization-time measuring unit (32b) detects that a predetermined sensor reference energization time elapses, to the indoor-unit control unit (35) of the indoor unit (3), sensor energization elapsed time information indicating that the measured sensor reference energization time exceeds the predetermined sensor reference energization time, and the the indoor-unit control unit (35) is configured to, when receiving the sensor energization elapsed time information, determine that the necessity of the replacement of the refrigerant-leak detection sensor (32) is detected and is further configured to transmit a replacement period notification code corresponding to a
message as replacement period notification information for instructing notification of the necessity of the replacement of the refrigerant-leak detection sensor (32) to the remote controller control unit (45) of the remote controller (4), wherein as the sensor reference energization time, an energization time shorter than an energization time of the refrigerant-leak detection sensor (32) in which occurrence of deterioration in detection performance of the refrigerant-leak detection sensor (32) due to aged deterioration is estimated is set to notify the necessity of the replacement of the refrigerant leak detection sensor (32) to the user before deterioration in the detection performance of the refrigerant-leak detection sensor (32) due to aged deterioration occurs, and
the remote controller control unit (45) is configured to perform control for displaying, based on the replacement period notification information, on the display unit (41), the message for notifying the necessity of the replacement of the refrigerant-leak detection sensor (32),
wherein an outdoor-unit control unit (23) of the outdoor unit (2) and the indoor-unit control unit (35) are configured to maintain the operation of the air conditioner (1) even when the message for notifying the necessity of the replacement of the refrigerant-leak detection sensor (32) is displayed on the display unit (41), and
the indoor-unit control unit (35) is further configured to perform control for measuring an energization time of the indoor unit (3) and for calculating a difference time between a life time until deterioration of a detection ability of the refrigerant-leak detection sensor (32) and the energization time of the indoor unit (3), and transmitting the difference time to the remote controller (4) together with the replacement period notification code, and
the remote controller control unit (45) is configured to perform control for displaying the difference time on the display unit (41) together with the message for notifying the necessity of the replacement of the refrigerant-leak detection sensor (32).

2. The air conditioner (1) according to claim 1,
wherein the indoor-unit control unit (35) measures an energization time of the indoor unit (3) and, when detecting that the energization time of the indoor unit (3) exceeds a predetermined indoor unit reference energization time, determines that the necessity of the replacement of the refrigerant-leak detection sensor (32) is detected, and
the indoor-unit control unit (35) configured to use both of the determination of the detection of the necessity of the replacement of the refrigerant-leak detection sensor (32) based on the energization time of the indoor unit (3) and the determination of the detection of the necessity of the replacement of the refrigerant-leak detection sensor (32) based on the sensor energization time.

3. The air conditioner (1) according to any one of claims 1 and 2, wherein
the indoor-unit control unit (35) is configured to perform control for transmitting, to the remote controller (4), a code corresponding to the message, which is replacement period notification information for instructing notification of the necessity of the replacement of the refrigerant-leak detection sensor (32), and
the remote controller control unit (45) is configured to perform control for displaying a message character string corresponding to the code on the display unit (41).

4. The air conditioner (1) according to any one of claims 1 and 2, wherein
the indoor-unit control unit (35) is configured to perform control for transmitting, to the remote controller (4), a code corresponding to the message, which is replacement period notification information for instructing notification of the necessity of the replacement of the refrigerant-leak detection sensor (32), and
the remote controller control unit (45) is configured to perform control for displaying a message code corresponding to the code on the display unit (41).

## Patentansprüche

1. Klimaanlage (1), umfassend:
eine Inneneinheit (3) zur Anordnung in Innenräumen;
eine Außeneinheit (2) zur Anordnung im Freien, ein Kältemittel zur Zirkulation zwischen der Außeneinheit (2) und der Inneneinheit (3);
eine Fernsteuerung (4), die mit der Inneneinheit (3) kommunizierend verbunden ist; und
einen Kältemittelleck-Erfassungssensor (32) zur Erfassung eines Lecks des Kältemittels, wobei
die Inneneinheit (3) eine Inneneinheit-Steuereinheit (35) zur Steuerung eines Betriebs der Inneneinheit (3) aufweist,
die Fernsteuerung (4) aufweist:
eine Fernsteuerung-Steuereinheit (45) zur Steuerung eines Betriebs der Fernsteuerung (4); und
eine Anzeigeeinheit (41) zur Anzeige verschiedener Arten von Informationen in der Fernsteuerung (4),
wobei der Kältemittelleck-Erfassungssensor (32) eine Energieversorgungszeit-Messeinheit (32b) aufweist, die eingerichtet ist, eine Energieversorgungszeit zu messen, in der der Kältemittelleck-Erfassungssensor (32) mit Energie versorgt ist,
und die Energieversorgungszeit-Messeinheit (32b) eingerichtet ist, wenn die Energieversorgungszeit-Messeinheit (32b) erfasst, dass eine vorbestimmte Sensor-Referenzenergieversorgungszeit abläuft, an die Inneneinheit-Steuereinheit (35) der Inneneinheit (3) eine Information über die abgelaufene Sensor-Energieversorgungszeit zu übertragen, die angibt, dass die gemessene Sensor-Referenzenergieversorgungszeit die vorbestimmte Sensor-Referenzenergieversorgungszeit überschreitet, und die Inneneinheit-Steuereinheit (35) eingerichtet ist, beim Empfangen der Information über die abgelaufene Sensor-Energieversorgungszeit zu bestimmen, dass die Notwendigkeit des Austauschs des Kältemittelleck-Erfassungssensors (32) ermittelt ist, und ferner eingerichtet ist, einen Austauschzeitraum-Benachrichtigungscode, der einer Nachricht entspricht, als Austauschzeitraum-Benachrichtigungsinformation zum Anweisen einer Benachrichtigung über die Notwendigkeit des Austauschs des Kältemittelleck-Erfassungssensors (32) an die Fernsteuerung-Steuereinheit (45) der Fernsteuerung (4) zu übertragen, wobei als die Sensor-Referenzenergieversorgungszeit eine Energieversorgungszeit, die kürzer ist als eine Energieversorgungszeit des Kältemittelleck-Erfassungssensors (32), in der ein Auftreten einer Verschlechterung der Erfassungsleistung des Kältemittelleck-Erfassungssensors (32) aufgrund von Alterungsverschlechterung geschätzt wird, eingestellt ist, um den Benutzer über die Notwendigkeit des Austauschs des Kältemittelleck-Erfassungssensors (32) zu benachrichtigen, bevor eine Verschlechterung der Erfassungsleistung des Kältemittelleck-Erfassungssensors (32) aufgrund von Alterungsverschlechterung auftritt, und
die Fernsteuerung-Steuereinheit (45) eingerichtet ist, auf Grundlage der Austauschzeitraum-Benachrichtigungsinformation eine Steuerung zum Anzeigen der Nachricht zur Benachrichtigung über die Notwendigkeit des Austauschs des Kältemittelleck-Erfassungssensors (32) auf der Anzeigeeinheit (41) durchzuführen,
wobei eine Außeneinheit-Steuereinheit (23) der Außeneinheit (2) und die Inneneinheit-Steuereinheit (35) eingerichtet sind, den Betrieb der Klimaanlage (1) auch dann aufrechtzuerhalten, wenn die Nachricht zur Benachrichtigung über die Notwendigkeit des Austauschs des Kältemittelleck-Erfassungssensors (32) auf der Anzeigeeinheit (41) angezeigt wird, und
die Inneneinheit-Steuereinheit (35) ferner eingerichtet ist, eine Steuerung zum Messen einer Energieversorgungszeit der Inneneinheit (3) und zum Berechnen einer Differenzzeit zwischen einer Lebensdauer bis zur Verschlechterung einer Erfassungsfähigkeit des Kältemittelleck-Erfassungssensors (32) und der Energieversorgungszeit der Inneneinheit (3) durchzuführen und die Differenzzeit zusammen mit dem Austauschzeitraum-Benachrichtigungscode an die Fernsteuerung (4) zu übertragen, und
die Fernsteuerung-Steuereinheit (45) eingerichtet ist, eine Steuerung zum Anzeigen der Differenzzeit zusammen mit der Nachricht zur Benachrichtigung über die Notwendigkeit des Austauschs des Kältemittelleck-Erfassungssensors (32) auf der Anzeigeeinheit (41) durchzuführen.

2. Klimaanlage (1) nach Anspruch 1, wobei die Inneneinheit-Steuereinheit (35) eine Energieversorgungszeit der Inneneinheit (3) misst und bei Erfassung, dass die Energieversorgungszeit der Inneneinheit (3) eine vorbestimmte Inneneinheit-Referenzenergieversorgungszeit überschreitet, bestimmt, dass die Notwendigkeit des Austauschs des Kältemittelleck-Erfassungssensors (32) erfasst ist, und
die Inneneinheit-Steuereinheit (35) eingerichtet ist, sowohl die Bestimmung der Erfassung der Notwendigkeit des Austauschs des Kältemittelleck-Erfassungssensors (32) auf der Grundlage der Energieversorgungszeit der Inneneinheit (3) als auch die Bestimmung der Erfassung der Notwendigkeit des Austauschs des Kältemittelleck-Erfassungssensors (32) auf der Grundlage der Sensor-Energieversorgungszeit zu verwenden.

3. Klimaanlage (1) nach einem der Ansprüche 1 und 2, wobei
die Inneneinheit-Steuereinheit (35) eingerichtet ist, eine Steuerung zum Übertragen, an die Fernsteuerung (4), eines Codes durchzuführen, der der Nachricht entspricht, die eine Austauschzeitraum-Benachrichtigungsinformation zum Anweisen einer Benachrichtigung über die Notwendigkeit des Austauschs des Kältemittelleck-Erfassungssensors (32) ist, und
die Fernsteuerung-Steuereinheit (45) eingerichtet ist, eine Steuerung zur Anzeige einer dem Code entsprechenden Nachrichtenzeichenfolge auf der Anzeigeeinheit (41) durchzuführen.

4. Klimaanlage (1) nach einem der Ansprüche 1 und 2, wobei
die Inneneinheit-Steuereinheit (35) eingerichtet ist, eine Steuerung zum Übertragen, an die Fernsteuerung (4), eines Codes durchzuführen, der der Nachricht entspricht, die eine Austauschzeitraum-Benachrichtigungsinformation zum Anweisen einer Benachrichtigung über die Notwendigkeit des Austauschs des Kältemittelleck-Erfassungssensors (32) ist, und
die Fernsteuerung-Steuereinheit (45) eingerichtet ist, eine Steuerung zur Anzeige einer dem Code entsprechenden Nachricht auf der Anzeigeeinheit (41) durchzuführen.

## Revendications

1. Climatiseur (1) comprenant :
une unité intérieure (3) destinée à être disposée à l'intérieur ;
une unité extérieure (2) destinée à être placée à l'extérieur, un réfrigérant destiné à circuler entre l'unité extérieure (2) et l'unité intérieure (3) ;
une télécommande (4) connectée en communication avec l'unité intérieure (3) ; et
un capteur de détection de fuite de réfrigérant (32) pour détecter une fuite de réfrigérant, dans lequel
l'unité intérieure (3) inclut une unité de commande de l'unité intérieure (35) pour commander le fonctionnement de l'unité intérieure (3),
la télécommande (4) inclut :
une unité de commande de la télécommande (45) pour commander le fonctionnement de la télécommande (4) ; et
une unité d'affichage (41) pour afficher divers types d'informations dans la télécommande (4),
dans lequel le capteur de détection de fuites de réfrigérant (32) inclut une unité de mesure du temps de mise sous tension (32b) qui est configurée pour mesurer un temps de mise sous tension pendant lequel le capteur de détection de fuites de réfrigérant (32) est excité,
et l'unité de mesure du temps de mise sous tension (32b) est configurée pour transmettre, lorsque l'unité de mesure du temps de mise sous tension (32b) détecte qu'un temps de mise sous tension de référence prédéterminé du capteur s'est écoulé, à l'unité de commande de l'unité intérieure (35) de l'unité intérieure (3), des informations sur le temps de mise sous tension écoulé du capteur indiquant que le temps de mise sous tension de référence du capteur mesuré dépasse le temps de mise sous tension de référence prédéterminé du capteur, et l'unité de commande de l'unité intérieure (35) est configurée pour, lorsqu'elle reçoit les informations sur le temps écoulé d'excitation du capteur, déterminer que la nécessité de remplacer le capteur de détection de fuite de réfrigérant (32) est détectée et est en outre configurée pour transmettre un code de notification d'une période de remplacement correspondant à un message d'information de notification de période de remplacement pour communiquer la notification de la nécessité de remplacer le capteur de détection de fuite de réfrigérant (32) à l'unité de commande de la télécommande (45) de la télécommande (4), dans lequel, en tant que temps de mise sous tension de référence du capteur, un temps de mise sous tension plus court que le temps de mise sous tension de référence du capteur de détection de fuite de réfrigérant (32) dans lequel la survenue d'une détérioration des performances de détection du capteur de détection de fuite de réfrigérant (32) due à un vieillissement de la détérioration est estimée, est défini pour notifier la nécessité de remplacer le capteur de détection de fuite de réfrigérant (32) à l'utilisateur avant que la détérioration de la performance de détection du capteur de détection de fuite de réfrigérant (32) due à un vieillissement de la détérioration ne se produise, et
l'unité de commande de la télécommande (45) est configurée pour commander l'affichage, sur l'unité d'affichage (41), du message de notification de la nécessité de remplacer le capteur de détection de fuite de fluide réfrigérant (32), en fonction des informations de notification de la période de remplacement,
dans lequel une unité de commande d'unité extérieure (23) de l'unité extérieure (2) et l'unité de commande d'unité intérieure (35) sont configurées pour maintenir le fonctionnement du climatiseur (1) même lorsque le message de notification de la nécessité de remplacer le capteur de détection de fuite de réfrigérant (32) est affiché sur l'unité d'affichage (41), et
l'unité de commande de l'unité intérieure (35) est en outre configurée pour effectuer une commande afin de mesurer un temps de mise sous tension de l'unité intérieure (3) et pour calculer un temps de différence entre une durée de vie jusqu'à la détérioration d'une capacité de détection du capteur de détection de fuites de réfrigérant (32) et le temps de mise sous tension de l'unité intérieure (3), et de transmettre le temps de différence à la télécommande (4) en même temps que le code de notification de la période de remplacement, et
l'unité de commande de la télécommande (45) est configurée pour commander l'affichage du temps de différence sur l'unité d'affichage (41) ainsi que le message notifiant la nécessité de remplacer le capteur de détection de fuites de réfrigérant (32).

2. Climatiseur (1) selon la revendication 1, dans lequel l'unité de commande de l'unité intérieure (35) mesure un temps de mise sous tension de l'unité intérieure (3) et, lorsqu'elle détecte que le temps de mise sous tension de l'unité intérieure (3) dépasse un temps de mise sous tension de référence prédéterminé de l'unité intérieure, elle détermine qu'il est nécessaire de remplacer le capteur de détection de fuite de réfrigérant (32), et
l'unité de commande de l'unité intérieure (35) configurée pour utiliser à la fois la détermination de la détection de la nécessité de remplacer le capteur de détection de fuite de réfrigérant (32) sur la base du temps de mise sous tension de l'unité intérieure (3) et la détermination de la détection de la nécessité de remplacer le capteur de détection de fuite de réfrigérant (32) sur la base du temps de mise sous tension du capteur.

3. Climatiseur (1) selon l'une quelconque des revendications 1 à 2, dans lequel
l'unité de commande de l'unité intérieure (35) est configurée pour effectuer la commande de transmission, à la télécommande (4), d'un code correspondant au message, qui est une information de notification de la période de remplacement pour instruire la notification de la nécessité de remplacer le capteur de détection de fuite de réfrigérant (32), et
l'unité de commande de la télécommande (45) est configurée pour commander l'affichage d'une chaîne de caractères correspondant au code sur l'unité d'affichage (41).

4. Climatiseur (1) selon l'une quelconque des revendications 1 à 2, dans lequel
l'unité de commande de l'unité intérieure (35) est configurée pour effectuer la commande de transmission, à la télécommande (4), d'un code correspondant au message, qui est une information de notification de la période de remplacement pour instruire la notification de la nécessité de remplacer le capteur de détection de fuite de réfrigérant (32), et
l'unité de commande de la télécommande (45) est configurée pour commander l'affichage d'un code de message correspondant au code sur l'unité d'affichage (41).
